# EUROPÄISCHE PATENTSCHRIFT

(11) **EP 3 502 403 B1**
(45) Veröffentlichungstag und Bekanntmachung des Hinweises auf die Patenterteilung: **21.10.2020**
(21) Anmeldenummer: 18212144.2
(22) Anmeldetag: 13.12.2018
(51) Int. Cl.: E06B 3/22, E06B 7/23, E06B 3/62

(54) **FENSTER- ODER TÜRPROFIL**
WINDOW OR DOOR PROFILE
PROFILÉ DE FENÊTRE OU DE PORTE

(30) Priorität: 20.12.2017 DE 202017107749 U
(43) Veröffentlichungstag der Anmeldung: 26.06.2019
(73) Patentinhaber: REHAU AG + Co, 95111 Rehau (DE)
(72) Erfinder: Eckert, Stefan, 91301 Forchheim (DE); Gorbunov, Igor, 90768 Fürth (DE); Melzer, Klaus, 91099 Poxdorf (DE)

(56) Entgegenhaltungen:
- DE-A1- 19 720 940
- DE-U1-202014 101 413

## Beschreibung

Die vorliegende Erfindung betrifft ein Fenster- oder Türprofil aus thermoplastischem Kunststoff mit anextrudierter Dichtung, wobei das Fenster- oder Türprofil eine Dichtungsnut mit zwei aufeinander zuweisenden Haltestegen zum Halten einer Ersatzdichtung umfasst, und wobei die anextrudierte Dichtung zwei Verbindungsabschnitte zur stoffschlüssigen Verbindung der anextrudierten Dichtung an das Fenster- oder Türprofil und einen Dichtungskopf umfasst, und die anextrudierte Dichtung die Dichtungsnut vollständig verdeckt, wobei der erste Verbindungsabschnitt mit einer zur Profilaußenseite gerichteten Profilaußenwand stoffschlüssig verbunden ist.

Grundsätzlich besitzen Kunststoffprofile für Fenster und Türen mehrere Dichtungen. Dabei unterscheidet man insbesondere Anschlagdichtungen und Verglasungsdichtungen. Die Verglasungsdichtungen sind von außen erkennbar und in dem Spalt zwischen dem Flächenelement des Fensters, insbesondere der Isolierglasscheibe, und dem Flügelrahmen bzw. bei Festverglasungen dem Blendrahmen angeordnet. Die Anschlagdichtungen haben dagegen die Aufgabe, den Spalt zwischen dem Blendrahmen und dem Flügelrahmen auf der Außenseite und der Innenseite des Fensters abzudichten und dabei teilweise herstellungsbedingte Toleranzen im jeweiligen Spaltmaß aufnehmen.

Im Stand der Technik ist es bekannt, sowohl Anschlagdichtungen als auch Verglasungsdichtungen als weichelastische Dichtungen auszubilden, die unter Verwendung eines entsprechenden Dichtungsfußes in Dichtungsaufnahmenuten des Blendrahmens oder des Flügelrahmens eingerollt oder eingedrückt werden. In jüngerer Zeit werden diese eingerollten oder eingedrückten Dichtungen in wachsendem Umfang durch anextrudierte Dichtungen aus weichelastischem, thermoplastischem Material ersetzt. Dabei kommt in der Regel ein sogenanntes Post-Coextrusionsverfahren (PCE) zum Einsatz. Bei einem solchen PCE-Verfahren wird die jeweilige Dichtung inline an die extrudierten und schon kalibrierten Blendrahmen- und Flügelrahmenprofile anextrudiert.

Aufgrund der unterschiedlichen Anforderungen an Verglasungsdichtungen einerseits und Anschlagdichtungen andererseits hinsichtlich Anpressdruck und abzudichtendem Spaltmaß kommen in der Regel für Verglasungsdichtungen und Anschlagdichtungen Dichtungsprofile mit unterschiedlichen Profilgeometrien zum Einsatz. Daher gibt es Tendenzen, sogenannte Universaldichtungen einzusetzen, also Dichtungen, die sowohl als Anschlagdichtung als auch als Verglasungsdichtung eingesetzt werden können. Ein solche Universaldichtung ist beispielsweise in der DE 197 20 940 B4 beschrieben. Bei der in der DE 197 20 940 B4 offenbarten Universaldichtung handelt es sich um eine anextrudierte Dichtung, die mit identischer Geometrie sowohl als Anschlagdichtung als auch als Verglasungsdichtung fungieren kann. Die Dichtungsgeometrie hat sich zwar in der Praxis als weitgehend geeignet erwiesen, allerdings neigt diese Dichtung beim Einsatz als Verglasungsdichtung sowie beim Einsatz als Anschlagdichtung an der Bandseite zum Krempeln oder Einrollen, d. h., die Dichtung wird bei gleichzeitiger Druck- und Scherbeanspruchung ungleichmäßig, zum Teil wellenförmig deformiert.

Um diesen Nachteil zu beheben, wird in der EP 2 265 790 B1 eine Universaldichtung vorgeschlagen, die einen Dichtungsfuß und einen Dichtungskopf aufweist, wobei der Dichtungskopf in eine Dichtungsnut mit zwei aufeinander zuweisenden Haltestegen eingebracht ist. Der Dichtungskopf weist eine Auflagefläche, die am jeweiligen Flügelrahmenprofil oder Blendrahmenprofil anliegt, einen zur Außenseite geneigten oder gebogenen Sichtbereich, einen Dichtbereich und einen den Dichtbereich abstützenden Stützsteg auf. Gemäß der EP 2 265 790 B1 ist an der Auflagefläche ein zur Innenseite geneigter, in die Hohlkammer weisender Stütznocken angeordnet, durch den der Stützsteg gestützt werden kann. Nachteilig an der in der EP 2 265 790 B1 beschriebenen Dichtung wird gesehen, dass diese einen hohen Materialeinsatz erfordert. Darüber hinaus kann es insbesondere bei hohen Extrusionsgeschwindigkeiten bei der Herstellung zu Schwankungen im Öffnungsmaß der Dichtungsaufnahmenut kommen kann, was zu ungewollten Materialanhäufungen in der Nutöffnung und dadurch zu einer mangelnden Anhaftung der anextrudierten Dichtung an dem diese umfassenden Fenster- oder Türprofil kommen.

An dieser Stelle setzt die vorliegende Erfindung ein, deren Aufgabe darin liegt, ein Fenster- oder Türprofil aus thermoplastischem Kunststoff mit anextrudierter Dichtung zur Verfügung zu stellen, das die Nachteile des Stands der Technik überwindet. Insbesondere soll das erfindungsgemäße Fenster- oder Türprofil hohe Extrusionsgeschwindigkeiten bei seiner Herstellung bei definierter Anbindung der anextrudierten Dichtung an das Fenster- oder Türprofil erlauben.

Diese und andere Aufgaben werden durch ein Fenster- oder Türprofil mit den Merkmalen des Anspruchs 1 gelöst. Bevorzugte Ausführungsformen des erfindungsgemäßen Fenster- oder Türprofils sind in den abhängigen Ansprüchen beschrieben.

Gemäß der vorliegenden Erfindung wurde erkannt, dass ein gleichmäßiges und ausreichendes Anhaften der Dichtung auch bei Schwankungen des Öffnungsmaßes der Dichtungsaufnahmenut dadurch erzielt werden kann, dass die Dichtung einseitig an der Außenseite des Profils anliegt und an der anderen Seite nach innen gerichtet an einem Haltesteg der Dichtungsaufnahmenut angebunden ist. Auf diese Weise ist das Auftreten von Materialanhäufungen im Bereich der Nutöffnung der Dichtungsaufnahmenut verhindert.

Wie hierin verwendet wird der Begriff "Öffnungsmaß" einer Nut der Abstand zwischen den Nutflanken im Bereich der Öffnung der Nut verstanden.

Dementsprechend liegt die vorliegende Erfindung in der Bereitstellung eines Fenster- oder Türprofils aus thermoplastischem Kunststoff mit anextrudierter Dichtung, wobei das Fenster- oder Türprofil eine Dichtungsaufnahmenut mit zwei aufeinander zuweisenden Haltestegen zum Halten einer Ersatzdichtung umfasst, und wobei die anextrudierte Dichtung zwei Verbindungsabschnitte zur stoffschlüssigen Verbindung der anextrudierten Dichtung an das Fenster- oder Türprofil und einen Dichtungskopf umfasst, und die anextrudierte Dichtung die Dichtungsaufnahmenut vollständig verdeckt, wobei der erste Verbindungsabschnitt mit einer zur Profilaußenseite gerichteten Profilaußenwand stoffschlüssig verbunden ist, wobei das Fenster- oder Türprofil erfindungsgemäß dadurch gekennzeichnet, dass der zweite Verbindungsabschnitt mit der Seite des Haltestegs, die auf den anderen Haltesteg zuweist, stoffschlüssig verbunden ist.

In Bezug auf das erfindungsgemäße Fenster- oder Türprofil ist es bevorzugt, wenn die zur Profilaußenseite gerichtete Profilaußenwand eine Ausnehmung aufweist, in die der erste Verbindungsabschnitt aufgenommen ist. Auf diese Weise wird die Wahrscheinlichkeit einer Materialanhäufung im Bereich der Dichtung im geschlossenen Zustand eines das erfindungsgemäße Fenster- oder Türprofil umfassenden Fensters oder einer das erfindungsgemäße Fenster- oder Türprofil umfassenden Tür weiter reduziert. Unter diesem Gesichtspunkt ist es besonders bevorzugt, wenn der erste Verbindungsabschnitt nicht über die zur Profilaußenseite gerichtete Profilaußenwand hinausragt. Weiter trägt dies auch zur Materialeinsparung bei.

Wie hierin verwendet ist der Begriff "Ausnehmung" in einer Profilwand so zu verstehen, dass sich die Ausnehmung nicht über die gesamte Wandstärke der Profilwand erstreckt, also noch eine Restwandstärke vorhanden ist.

Zusätzlich oder alternativ dazu kann es günstig sein, wenn der zweite Verbindungsabschnitt im Bereich der Verbindung zwischen dem zweiten Verbindungsabschnitt und dem Haltesteg nicht über die zur Profilaußenseite gerichtete Wand des Haltestegs hinausragt. Dies trägt weiter dazu bei, eine Materialanhäufung im Bereich der Dichtung im geschlossenen Zustand eines das erfindungsgemäße Fenster- oder Türprofil umfassenden Fensters oder einer das erfindungsgemäße Fenster- oder Türprofil umfassenden Tür weiter zu verringern.

Es kann auch bevorzugt sein, wenn die anextrudierte Dichtung keinen in die Dichtungsaufnahmenut hineinragenden Dichtungsfuß umfasst. Auch dies trägt weiter auch zur Materialeinsparung bei. Darüber hinauswerden soll Materialanhäufungen im Bereich der Öffnung der Dichtungsaufnahmenut verhindert, was wiederum für ein definiertes Anhaften der anextrudierten Dichtung an dem erfindungsgemäßen Fenster- oder Türprofil sorgt.

Es kann auch von Nutzen sein, wenn die Dichtung im PCE-Verfahren an das Fenster- oder Türprofil anextrudiert ist. Dies sorgt für eine stabile, stoffschlüssige Verbindung zwischen den Verbindungsabschnitten der anextrudierten Dichtung und dem Fenster- oder Türprofil.

Bevorzugt wird die anextrudierte Dichtung aus thermoplastischem Elastomer oder Weich-PVC (PVC-P) hergestellt, insbesondere homogen aus nur einer Komponente.

Bevorzugt ist die anextrudierte Dichtung als Anschlagsdichtung eingesetzt.

Das erfindungsgemäße Fenster- oder Türprofil sowie einzelne Teile davon können auch zeilenweise oder schichtweise unter Verwendung eines zeilenaufbauenden oder schichtaufbauenden Fertigungsverfahrens (z. B. 3D-Druck) hergestellt werden.

Im Folgenden soll die vorliegende Erfindung unter Bezugnahme auf die in den Figuren dargestellten Ausführungsformen des erfindungsgemäßen Fenster- oder Türprofils im Detail erläutert werden. Insoweit sich Teile oder Bauelemente in ihrer Funktion entsprechen, wird deren Beschreibung nicht in jeder der folgenden Figuren wiederholt. Es zeigen:
- Fig. 1: einen Ausschnitt aus einer Querschnittsdarstellung einer Ausführungsform des erfindungsgemäßen Fenster- oder Türprofils; und
- Fig. 2: einen Ausschnitt aus einer Querschnittsdarstellung einer weiteren Ausführungsform des erfindungsgemäßen Fenster- oder Türprofils.

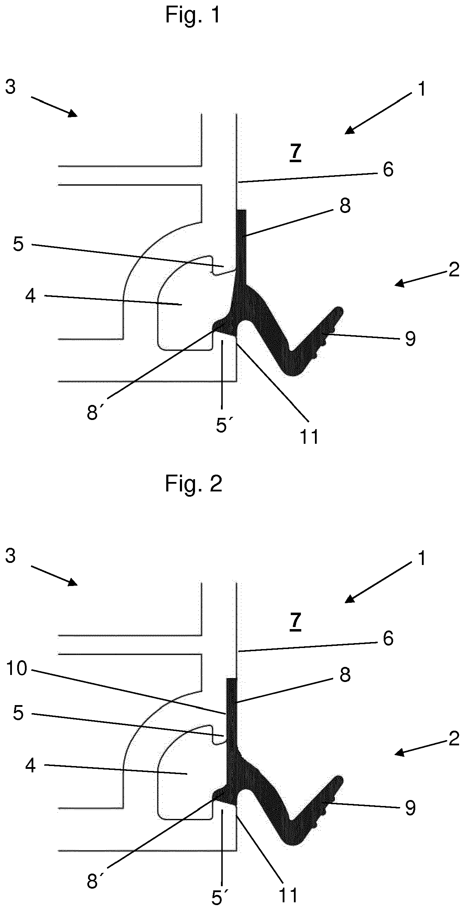

In Fig. 1 ist ein Ausschnitt aus einer Querschnittsdarstellung einer Ausführungsform des erfindungsgemäßen Fenster- oder Türprofils 1 am Beispiel eines Flügelprofils für ein Kunststofffenster gezeigt. Das erfindungsgemäße Fenster- oder Türprofil 1 ist aus einem thermoplastischen Polymermaterial hergestellt, vorzugsweise Polyvinylchlorid (PVC), insbesondere Hart-PVC (PVC-U) oder glasfaserverstärktem PVC, dem zusätzlich Zusatzstoffe wie z. B. Stabilisatoren, Weichmacher, Pigmente und dergleichen zugesetzt sind. Es ist aus einer Vielzahl von Hohlkammern aufgebaut, die jeweils von Stegen des erfindungsgemäßen Fenster- oder Türprofils 1 umgeben sind. Eine Dichtung 2 ist an ein Profilstück 3 des erfindungsgemäßen Fenster- oder Türprofils 1 anextrudiert.

Das erfindungsgemäße Fenster- oder Türprofil 1 weist eine Dichtungsaufnahmenut 4 auf. Die Dichtungsaufnahmenut 4 wird im Bereich ihrer Öffnung durch zwei aufeinander zuweisende Haltestege 5, 5' begrenzt. Aufgabe der Haltestege 5, 5' ist es insbesondere, eine Ersatzdichtung für die anextrudierte Dichtung 2 klemmend in der Dichtungsaufnahmenut 4 zu halten, wenn die anextrudierte Dichtung 2 entfernt worden ist, beispielsweise aus Verschleißgründen. An ihren der Öffnung der Dichtungsaufnahmenut 4 abgewandten Enden setzen sich die Haltestege 5, 5' in einer Profilaußenwand 6 fort. Die Profilaußenwand 6 ist zur Profilaußenseite 7 gerichtet.

Die anextrudierte Dichtung 2 umfasst zwei Verbindungsabschnitte 8, 8' und einen Dichtungskopf 9 auf. In der dargestellten Ausführungsform besitzt der Dichtungskopf 9 im Wesentlichen eine V-Form, durch die der beim Schließen des Fensters oder der Tür auftretende Schließdruck aufgenommen werden soll. Der erste Verbindungsabschnitt 8 der anextrudierten Dichtung 2 ist als im Wesentlichen gerader Lappen ausgebildet, der flächig an die Profilaußenwand 6 anextrudiert ist, also stoffschlüssig mit der Profilaußenwand 6 verbunden ist. Die Verbindung zwischen dem ersten Verbindungsabschnitt 8 der anextrudierten Dichtung 2 und dem erfindungsgemäßen Fenster- oder Türprofil 1 erstreckt sich dabei auch in die zur Profilaußenseite 7 gerichtete Oberfläche des ersten Haltestegs 5 der Dichtungsaufnahmenut 4. Der dem ersten Haltesteg 5 in der Öffnung der Dichtungsaufnahmenut 4 gegenüberliegende zweite Haltesteg 5' ist an der Seite, die auf den ersten Haltesteg 5 zuweist, stoffschlüssig mit dem zweiten Verbindungsabschnitt 8' verbunden. Dadurch ist die Dichtungsaufnahmenut 4 vollständig von der anextrudierten Dichtung 2 überdeckt. Schwankungen im Öffnungsmaß der Dichtungsaufnahmenut 4 wirken sich so nicht auf die Verbindungsflächen zwischen der anextrudierten Dichtung 2 und dem Fenster- oder Türprofil 1 aus. Es kommt auch zu keinen Materialanhäufungen in diesem Bereich, so dass das erfindungsgemäße Fenster- oder Türprofil 1 mit hoher Extrusionsgeschwindigkeit hergestellt werden kann. Dazu trägt auch bei, dass der zweite Verbindungsabschnitt 8' im Bereich der Verbindung zwischen dem zweiten Verbindungsabschnitt 8' und dem Haltesteg 5' nicht über die zur Profilaußenseite 7 gerichtete Wand 11 des Haltestegs 5' hinausragt.

Ein Dichtungsfuß, der die Haltestege 5, 5' zur Befestigung am erfindungsgemäßen Fenster- oder Türprofil hintergreifen würde, ist für das Erzielen einer ausreichenden Befestigung der anextrudierten Dichtung 2 nicht erforderlich, was zu erheblichen Materialeinsparungen führt.

Die anextrudierte Dichtung 2 ist im Post-Coextrusionsverfahren (PCE-Verfahren) aus Weich-PVC (PVC-P) an das Profilstück 3 aus Hart-PVC (PVC-U) anextrudiert, wobei der erste Verbindungsabschnitt 8 mit der Profilaußenwand 6 und der zweite Verbindungsabschnitt 8' mit dem Haltesteg 5' stoffschlüssig verbunden sind.

In Fig. 2 ist eine weitere Ausführungsform des erfindungsgemäßen Fenster- oder Türprofils 1 gezeigt. Um Wiederholungen zu vermeiden, werden daher im Folgenden nur Unterschiede zu der in Fig. 1 dargestellten Ausführungsform des erfindungsgemäßen Fenster- oder Türprofils 1 beschrieben. Die Ausführungen zu Fig. 1 gelten auch für die Ausführungsform gemäß Fig. 2 entsprechend. Gleiche Elemente sind in den Abbildungen durch identische Bezugszeichen gekennzeichnet.

Fig. 2 zeigt einen Ausschnitt aus einer Querschnittsdarstellung gemäß einer weiteren Ausführungsform des erfindungsgemäßen Fenster- oder Türprofils 1 wiederum am Beispiel eines Flügelrahmenprofils 1 für ein Kunststofffenster. Im Unterschied zu dem in Fig. 1 gezeigten Flügelrahmenprofil weist das in Fig. 2 dargestellte erfindungsgemäße Fenster- oder Türprofil 1 an der zur Profilaußenseite 7 gerichteten Profilaußenwand 6 eine Ausnehmung 10 auf. In die Ausnehmung 10 ist der wiederum lappenförmig ausgebildete erste Verbindungsabschnitt 8 der anextrudierten Dichtung 2 aufgenommen. Dabei schließt der erste Verbindungsabschnitt 8 bündig mit der Profilaußenwand 6 ab. Alternativ kann die Profilaußenwand 6 auch überstehen. Auf diese Weise wird die Wahrscheinlichkeit einer Materialanhäufung im Bereich der anextrudierten Dichtung 2 im geschlossenen Zustand eines das erfindungsgemäße Fenster- oder Türprofil 1 umfassenden Fensters oder einer das erfindungsgemäße Fenster- oder Türprofil 1 umfassenden Tür weiter reduziert.

Die anextrudierte Dichtung 2 ist wiederum im Post-Coextrusionsverfahren (PCE-Verfahren) aus Weich-PVC (PVC-P) an das Profilstück 3 des erfindungsgemäßen Fenster- oder Türprofils 1 aus Hart-PVC (PVC-U) anextrudiert, wobei der erste Verbindungsabschnitt 8 mit der Profilaußenwand 6 und der zweite Verbindungsabschnitt 8' mit dem Haltesteg 5' stoffschlüssig verbunden sind, wobei der erste Verbindungsabschnitt 8 in der Ausnehmung 10 der Profilaußenwand 6 aufgenommen ist.

Die vorliegende Erfindung wurde exemplarisch unter Bezugnahme auf Fensterprofile für den Flügelrahmen eines Fensters beschrieben. Es versteht sich, dass die vorliegende Erfindung auch auf Blendrahmenprofile für ein Fenster sowie für Blendrahmen-, Zargen- oder Flügelrahmenprofile einer Tür entsprechend anwendbar ist.

## Patentansprüche

1. Fenster- oder Türprofil (1) aus thermoplastischem Kunststoff mit anextrudierter Dichtung (3), wobei das Fenster- oder Türprofil (1) eine Dichtungsaufnahmenut (4) mit zwei aufeinander zuweisenden Haltestegen (5, 5') zum Halten einer Ersatzdichtung umfasst, und wobei die anextrudierte Dichtung (2) zwei Verbindungsabschnitte (8, 8') zur stoffschlüssigen Verbindung der anextrudierten Dichtung (2) an das Fenster- oder Türprofil (1) und einen Dichtungskopf (9) umfasst, und die anextrudierte Dichtung (2) die Dichtungsaufnahmenut (4) vollständig verdeckt, wobei der erste Verbindungsabschnitt (8) mit einer zur Profilaußenseite (7) gerichteten Profilaußenwand (6) stoffschlüssig verbunden ist,
**dadurch gekennzeichnet, dass**
der zweite Verbindungsabschnitt (8') mit der Seite des Haltestegs (5'), die auf den anderen Haltesteg (5) zuweist, stoffschlüssig verbunden ist.

2. Fenster- oder Türprofil (1) nach Anspruch 1, **dadurch gekennzeichnet, dass** die zur Profilaußenseite (7) gerichtete Profilaußenwand (6) eine Ausnehmung (10) aufweist, in die der erste Verbindungsabschnitt (8) aufgenommen ist.

3. Fenster- oder Türprofil (1) nach Anspruch 2, **dadurch gekennzeichnet, dass** der erste Verbindungsabschnitt (8) nicht über die zur Profilaußenseite (7) gerichtete Profilaußenwand (6) hinausragt.

4. Fenster- oder Türprofil (1) nach einem der Ansprüche 1 bis 3, **dadurch gekennzeichnet, dass** der zweite Verbindungsabschnitt (8') im Bereich der Verbindung zwischen dem zweiten Verbindungsabschnitt (8') und dem Haltesteg (5') nicht über die zur Profilaußenseite (7) gerichtete Wand (11) des Haltestegs (5') hinausragt.

5. Fenster- oder Türprofil (1) nach einem der Ansprüche 1 bis 4, **dadurch gekennzeichnet, dass** die anextrudierte Dichtung (2) keinen in die Dichtungsaufnahmenut (4) hineinragenden Dichtungsfuß umfasst.

6. Fenster- oder Türprofil (1) nach einem der Ansprüche 1 bis 5, **dadurch gekennzeichnet, dass** die Dichtung (2) im PCE-Verfahren anextrudiert ist.

## Claims

1. Window or door profile (1) of thermoplastic material with an extruded seal (3), wherein the window or door profile (1) comprises a seal-receiving groove (4) with two retaining webs (5, 5') facing one another for holding a replacement seal, and wherein the extruded seal (2) comprises two connecting sections (8, 8') for the materially bonded connection of the extruded seal (2) to the window or door profile (1) and a seal head (9), and the extruded seal (2) completely conceals the seal-receiving groove (4), wherein the first connecting section (8) is materially connected to a profile outer wall (6) directed towards the profile outer side (7),
**characterised in that**
the second connecting section (8') is materially connected to the side of the retaining web (5') facing the other retaining web (5).

2. Window or door profile (1) according to claim 1, **characterised in that** the profile outer wall (6) directed towards the profile outer side (7) comprises a recess (10) in which the first connecting section (8) is received.

3. Window or door profile (1) according to claim 2, **characterised in that** the first connecting section (8) does not protrude beyond the profile outer wall (6) directed towards the profile outer side (7).

4. Window or door profile (1) according to one of claims 1 to 3, **characterised in that** the second connecting section (8') in the area of the connection between the second connecting section (8') and the retaining web (5') does not protrude beyond the wall (11) of the retaining web (5') directed towards the profile outer side (7).

5. Window or door profile (1) according to any one of claims 1 to 4, **characterised in that** the extruded seal (2) does not comprise any seal foot protruding into the seal-receiving groove (4).

6. Window or door profile (1) according to any one of claims 1 to 5, **characterised in that** the seal (2) is extruded in a PCE process.

## Revendications

1. Profil de fenêtre ou de porte (1) en matière synthétique thermoplastique avec un joint d'étanchéité (3) appliqué par extrusion, dans lequel le profil de fenêtre ou de porte (1) comprend une rainure de logement de joint d'étanchéité (4) avec deux entretoises de maintien (5, 5') pointant l'une vers l'autre servant à maintenir un joint d'étanchéité de remplacement, et dans lequel le joint d'étanchéité (2) appliqué par extrusion comprend deux sections de liaison (8, 8') servant à relier par liaison de matière le joint d'étanchéité (2) appliqué par extrusion au profil de fenêtre ou de porte (1) et une tête de joint d'étanchéité (9) et le joint d'étanchéité (2) appliqué par extrusion dissimule en totalité la rainure de logement de joint d'étanchéité (4), dans lequel la première section de liaison (8) est reliée par liaison de matière à une paroi extérieure de profil (6) dirigée vers le côté extérieur de profil (7),
**caractérisé en ce que**
la deuxième section de liaison (8') est reliée par liaison de matière au côté de l'entretoise de maintien (5'), qui pointe vers l'autre entretoise de maintien (5).

2. Profil de fenêtre ou de porte (1) selon la revendication 1, **caractérisé en ce que** la paroi extérieure de profil (6) dirigée vers le côté extérieur de profil (7) présente un évidement (10), dans lequel la première section de liaison (8) est logée.

3. Profil de fenêtre ou de porte (1) selon la revendication 2, **caractérisé en ce que** la première section de liaison (8) ne dépasse pas au-delà de la paroi extérieure de profil (6) dirigée vers le côté extérieur de profil (7).

4. Profil de fenêtre ou de porte (1) selon l'une quelconque des revendications 1 à 3, **caractérisé en ce que** la deuxième section de liaison (8') ne dépasse pas au-delà de la paroi (11), dirigée vers le côté extérieur de profil (7), de l'entretoise de maintien (5') dans la zone de la liaison entre la deuxième section de liaison (8') et l'entretoise de maintien (5').

5. Profil de fenêtre ou de porte (1) selon l'une quelconque des revendications 1 à 4, **caractérisé en ce que** le joint d'étanchéité (2) appliqué par extrusion ne comprend aucun pied de joint d'étanchéité dépassant à l'intérieur de la rainure de logement de joint d'étanchéité (4).

6. Profil de fenêtre ou de porte (1) selon l'une quelconque des revendications 1 à 5, **caractérisé en ce que** le joint d'étanchéité (2) est appliqué par extrusion dans le procédé PCE (procédé postérieur de co-extrusion).
